# EUROPEAN PATENT SPECIFICATION

(11) **EP 4 498 200 B1**
(45) Date of publication and mention of the grant of the patent: **20.05.2026**
(21) Application number: 23382782.3
(22) Date of filing: 27.07.2023
(51) Int. Cl.: G05D 1/00, B64D 39/00, B64D 43/00, B64D 47/08, G05D 1/244, G05D 1/672, G05D 1/697

(54) **GUIDANCE SYSTEM AND METHOD OF AN ELEMENT TOWARDS A TARGET**
SYSTEM UND VERFAHREN ZUR LENKUNG EINES ELEMENTES AUF EIN ZIEL
SYSTÈME ET MÉTHODE DE GUIDAGE D'UN ÉLÉMENT VERS UNE CIBLE

(43) Date of publication of application: 29.01.2025
(73) Proprietor: Airbus Defence and Space, S.A.U., 28906 Getafe - Madrid (ES)
(72) Inventor: POLO CASTAÑO, Alberto, Getafe (ES)
(74) Representative: Elzaburu S.L.P.

(56) References cited:
- WO-A1-2006/091217
- US-A1- 2003 209 633
- US-A1- 2018 173 246
- US-A1- 2021 039 804
- US-A1- 2023 215 041

## Description

### FIELD OF THE INVENTION

The invention relates to the field of guidance methods and systems. The invention can be applied in many fields, although it is particularized on aerial refuelling and automatic guidance of a refuelling boom or a receiver refuelling probe towards a refuelling receptacle or drogue, respectively.

### BACKGROUND OF THE INVENTION

A known solution to the guidance subject, frequently used in industrial robotics, makes use of mechanism kinematics to calculate the mechanism joint positions that place, for instance, a nozzle of a refuelling boom in the receiving point. A known method comprises the following steps:
- Continuous determination of the 3D position in a three-dimensional space of the target from the information given by appropriate sensors. The sensors may be video cameras plus computer vision systems, artificial intelligence algorithms, LIDAR/TOF sensors, structured light cameras or other 3D cameras, laser scanners etc. In all cases, the positioning and parameters of these sensors have to be precisely known, thus a calibration is required.
- Continuous determination of the mechanical arm end effector 3D position is also performed. Frequently, it is obtained from the knowledge of its geometry, kinematics and the signals of its joints position sensors. Similar techniques as the indicated in the position of the target can also be used as alternative or in addition.
- After knowing both 3D positions, arm and target ones, the mechanical system is controlled to take the arm to the target according to a calculated path and/or a guidance algorithm.

The procedure described before has some disadvantages in high precision applications, because many parameters with error are involved in the calculation of both target and end effector positions: spatial location of remote sensors, such as cameras, calibration, sensors errors, mechanical manufacturing and assembly tolerances, flexibility of mechanical components. Calibration itself faces many difficulties:
- Many of these parameters can be modified by things such as degradation with time, environmental conditions, machinery maintenance, machine manoeuvres, external perturbations.
- Many of these errors accumulate in the calculations making it very difficult to reach high precisions, even if individual errors are small.
- Calibration can be degraded during the operation of the machine, what can produce accidents or operation difficulties.
- Calibration may require expensive test campaigns or make system operation more complex for the customer.

To increase accuracy in industrial environments, robotic arms are designed extremely stiff, therefore heavy, to warrantee a stable precise geometry. High precision calibration and maintenance is also required. However typical light weight aircraft and spacecraft structures are remarkably flexible and do not have stable geometry. A strict continuous and precise maintenance is not either easy or even possible in aircraft remote operation bases nor in space.

If automated air to air refuelling guidance is desired, the above method could be applied but the mentioned drawbacks make it extremely difficult to implement in an aerial application.

It is known document WO2006091217 disclosing an in-flight refueling system, along with an alignment system and method, aimed at substantially automating the positioning and engagement of a refueling apparatus carried by a first aircraft with a refueling receptacle located on a second aircraft. This automation facilitates the execution of an in-flight refueling operation between the two aircraft. More specifically, the invention enables the alignment of the refueling boom with the receptacle, allowing an extendable nozzle to deploy from the boom and engage the receptacle to initiate the fuel transfer process.

It is also known document US2003209633 disclosing an aircraft distance measuring system that processes images from at least one camera to determine the distance between a refueling boom nozzle and the refueling receptacle of a receiving aircraft, based on the known length and position of the boom. Existing sensors provide data on the boom's extension and angle, while the connection points of the boom and the camera on the refueling aircraft serve as reference markers. Each camera captures multiple images of the boom nozzle and the refueling receptacle, which are converted into pixel-based images. A database within the system stores wireframe models of various aircraft types. The system compares the captured image of the receiving aircraft to these models to identify the aircraft type and its known receptacle position. Using continuous image input, the system analyzes position, distance, and orientation to dynamically update the calculated distance between the boom nozzle and the refueling receptacle.

It is also known document US2018173246 disclosing a method and apparatus for physically coupling a first aircraft and a second aircraft in flight, for example, to perform air-to-air refueling. The method involves transmitting an electromagnetic signal from a transmitter on the first aircraft, receiving the signal with a receiver on the second aircraft, and using one or more processors to control at least one of the aircraft based on the received signal. This control enables the aircraft to achieve a predetermined configuration in which they are physically connected, such as being attached together for the refueling operation.

It is also known document US2023215041 disclosing techniques for estimating the position and orientation (pose) of a fuel receptacle for aerial refueling, based on the estimated position and pose of the receiving aircraft. A video frame capturing the receiving aircraft is obtained from a single camera. An initial estimate of the aircraft's position and pose is generated, which is then used to create an initial rendering of an aircraft model. This rendering, together with the video frame, is used to determine refinement parameters-such as translational and rotational adjustments-to improve the initial estimate. The refined position and pose are then used to determine the precise location of the fuel receptacle, enabling control of the refueling boom for engagement. In some implementations, features extracted from the video frame and the model rendering are processed by a deep learning neural network to compute the refinement parameters.

It is known document US2021039804A1 disclosing a system and method for Automated Aerial Refueling (AAR) that combines unrelated capabilities to provide a high integrity solution to boom manipulation and insertion to couple with a receiver receptacle. Precise positioning systems on each aircraft coupled via data link provide a high integrity relative positioning solution generating a requisite integrity for positioning yet insufficient for boom insertion. High definition cameras onboard the tanker provide multi-wavelength remote vision digital images used to identify the boom fitting as well as the receptacle. Combined with boom position information from the tanker, the system determines pixel position inputs from stereo digital images to precisely identify the boom and receptacle and manipulate the boom to insert the boom fitting into the receptacle. Constant camera generated feedback and updated relative positioning alerts the system and disconnects the boom should the receiver aircraft stray outside the proper position.

### SUMMARY OF THE INVENTION

This invention consists of a guidance method and system that avoids the previous difficulties.

It is therefore an object of the present invention a guidance system of an element towards a target according to claim 1.

It is also an object of the invention a guidance method of an element towards a target according to claim 9.

The method and system object of the invention are based on being able to predict the trajectory of the element in the images of the imaging device, for instance a camera, for a series of movements of the element. The guidance requires performing movements of the element such that it reaches and coincides with the target visually in the taken images at the same time. The performed movements will take the element to the target. When there is relative movement between the element and the target, the series of movements has to be continuously updated in order to adapt to relative position changes.

The system and method object of the invention have the advantages that it allows a control based on 2D received images instead of 3D location of the elements into space, what requires knowledge of more parameters and more complex calculations. Moreover, the imaging devices already exist in the state of the art, located for instance in the tanker aircraft, therefore no dedicated imaging device is needed. Thus, the system makes use of simple technology, some of the devices being already available in the aircraft involved. It is also an object of the invention an air to air refuelling system comprising:
- a refuelling boom of a tanker aircraft and a receptacle of a receiver aircraft in which the refuelling boom is connected for refuelling, or
- a probe of a receiver aircraft and a drogue of a tanker aircraft configured to be connected to the probe for refuelling,
the air to air refuelling system comprising the guidance system according to the above technical features.

It is also an object of the present application a tanker aircraft comprising a refuelling boom for refuelling and an air to air refuelling system according to the above.

It is also an object of the present application a receiver aircraft comprising a probe for refuelling and an air to air refuelling system according to the above.

Although the invention is applied to automated aerial refuelling, it could also be used in any application for approaching any mechanisms to a target, for example, a drone to a specific target.

Thus, it is also an object of the invention a drone comprising a guidance system according to the above technical features.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a schematic perspective lateral view of a tanker aircraft and a receiver aircraft with a boom and receptacle refuelling system.
Figure 2 shows a schematic representation of the images taken by two cameras, left and right camera, located at both sides of a tanker aircraft for an embodiment of the invention.
Figures 3A and 3B show a representation of the images taken by one camera in another embodiment of the invention.
Figure 4 shows a representation of the images taken by a camera in another embodiment of the invention.
Figures 5A and 5B show a schematic representation of an embodiment of the invention having one camera. Figure 5A shows an image taken by the one camera and figure 5B shows a lateral view of a refuelling boom and a receiver aircraft according the depicted embodiment.

### DETAILED DESCRIPTION OF THE INVENTION

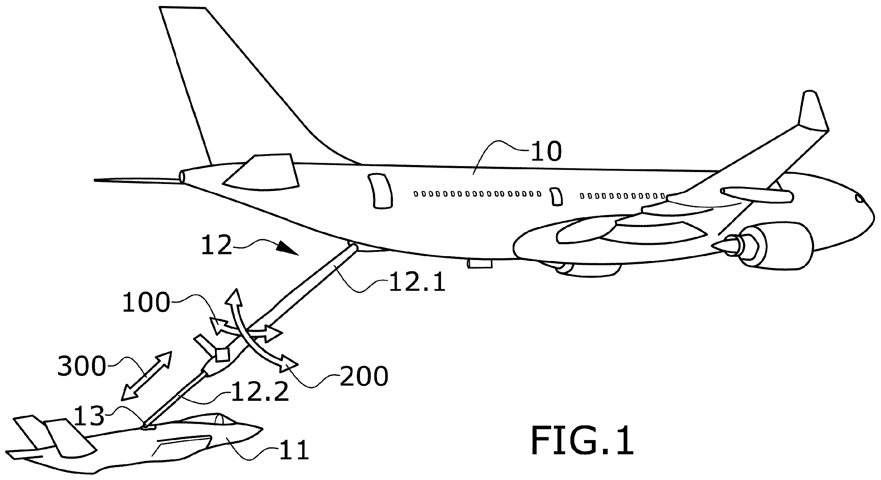

Figure 1 shows a schematic perspective lateral view of a tanker aircraft (10) and a receiver aircraft (11) with a refuelling boom (12) - receptacle (13) system. The refuelling boom (12) comprises a first part (12.1) proximal to the tanker aircraft (10) and a second telescopic part (12.2) distal from the tanker aircraft (10). The roll (100), pitch (200) and linear telescopic (300) degrees of freedom are shown in figure 1. Therefore, the refuelling boom (12) comprises a roll joint and a pitch joint. Other kinematic boom architectures are possible, for example pitch-yaw instead of pitch-roll.

In an embodiment, while the element (1) is controlled to keep the predetermined position of the reference mark with respect to the reference mark of the target (2), the control means are configured to linearly move the element (1) towards the target (2).

It is understood by linear motion the movement of an object in one dimension, from one place to another in a straight line. For instance, the movement of the second telescopic part (12.2) or a horizontal straight movement of the aircraft.

According to the invention, the guidance system comprises a first and a second imaging devices configured to view both the target (2) and the element (1), each imaging device being located in a different position in the space.

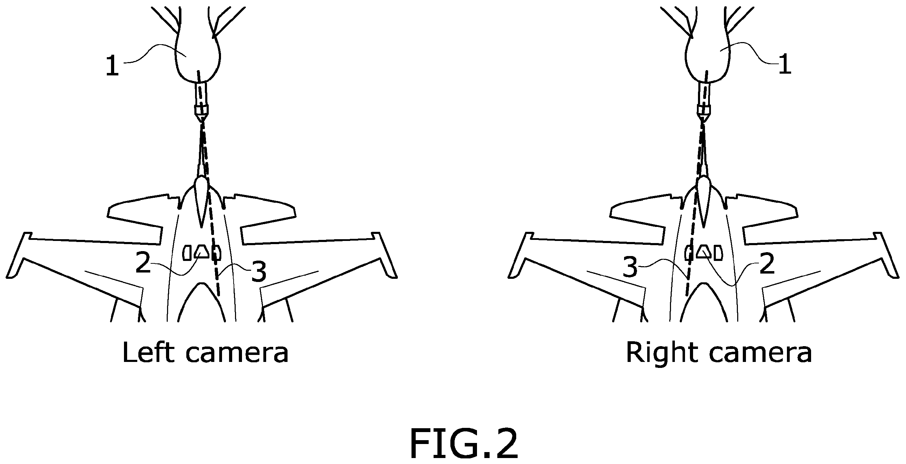

Figure 2 shows a schematic representation of the images taken by two cameras, left and right camera, located in a tanker aircraft (10).

The shown guidance system comprises:
- two imaging devices, for instance, two cameras, with visibility of the target (2) and of the element (1) that will contact the target (2). The cameras are located at different positions in the space, i.e., at different locations in the aircraft. The imaging devices are taking real time images of the refuelling area.
- a control means in communication with the imaging device and with the element (1) so that it is configured to receive the images taken by the at least one imaging device, the control means being configured to:
   - locate in the images received from the imaging device a reference mark of the element (1) and of the target (2),
   - send an instruction to the element (1) to move the element (1) so that the reference mark of the element (1) is located in a predetermined position with respect to the reference mark of the target (2) in the received images so that maintaining this predetermined position in the images received allows the element (1) to follow a predetermined trajectory towards the target (2),
   - while the element (1) is controlled to keep the predetermined position of the reference mark with respect to the reference mark of the target (2), send an instruction to the element (1) to move the element (1) towards the target (2), and
   - continuously perform the steps until the element (1) reaches the target (2).

According to the above, the method and system object of the invention is based on being able to predict the trajectory of the element (1) in the images taken by the imaging device for a series of movements of the element (1).

In an embodiment, the element (1) is a refuelling boom (12) of a tanker aircraft (10) comprising a nozzle (12.3) and the target (2) is a receptacle (13) of a receiver aircraft (11). As it is known, the nozzle (12.3) is configured to make contact with the receptacle (13) for refuelling. In this embodiment, the reference mark of the refuelling boom (12) is a nozzle axis (3) and the predetermined position is that the nozzle axis (3) passes through the vicinity of the reference mark of the receptacle (13) in the images of both imaging devices. In this way, the nozzle axis (3) defines the trajectory of the refuelling boom (12) towards the receptacle (13) that will be followed by maintaining said predetermined position.

The nozzle axis (3) may be an axis parallel to a longitudinal direction of the nozzle (12.3) and the predetermined position is that said axis (3) passes through the vicinity of a reference mark of the target (2) in the images of both imaging devices, for instance, at the same time.

Thus, an imaginary line is depicted in the images received from both imaging devices, the imaginary line extending in the longitudinal direction of the element (1), i.e., running lengthwise.

The axis should preferably be an axis passing through the center of the nozzle (12.3).

Passes through the vicinity of the target (2) has to be interpreted as the axis (3) being located over the target (2), for instance, over its center, if any, or located over an area in the vicinity of the target (2), i.e., a surrounding area. It should be noted that in the application of the invention a very precise location of the element (1) and the target (2) is not required because in many refuelling applications, the element (1) or the target (2) is made to, in the final phase of the approach, physically guide the other device to absorb any misalignment.

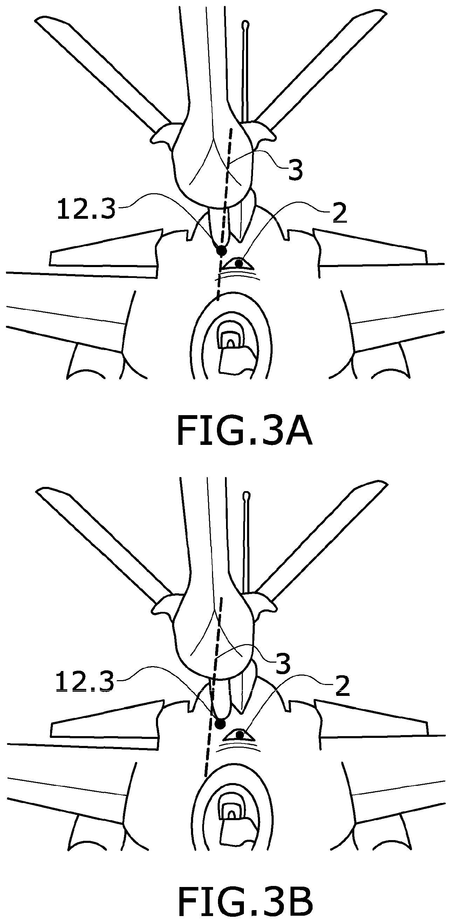

As shown in figures 3A and 3B a good enough estimate of the axis (3) is enough as long as it passes over the nozzle (12.3) in the image, because in the vicinity of the target (2), the nozzle (12.3) will move towards the target (2) with a limited error that decreases as both approach. Figures 3A and 3B provide examples of good and bad estimates. Figure 3A shows a good estimate while figure 3B shows a bad estimate in which the error will not reduce to zero as nozzle (12.3) and receptacle (13) approach to each other because the nozzle (12.3) is not part of the estimated axis (3).

As previously stated, the refuelling boom (12) comprises a first part (12.1) proximal to the tanker aircraft (10) and a second telescopic part (12.2) distal from the tanker aircraft (10), the direction of the first part (12.1) being adjustable, in an embodiment, rotatable, in a three-dimensional cartesian coordinate system.

As shown in figure 1, the refuelling boom (12) is rotatable around a front-to-back axis of an aircraft to roll (100) joint and around the side-to-side axis of the aircraft to pitch (200) joint.

More specifically, the control means is configured to:
- control the first part (12.1) to make the nozzle axis (3) to pass through the vicinity of the reference mark of the target (2) in the images taken by the first imaging device and continuously control to keep this condition,
- control the first part (12.1) to make the nozzle axis (3) to pass through the vicinity of the reference mark of the target (2) in the images taken by the second imaging device and continuously control to keep this condition,
- while both previous conditions are simultaneously met, linearly deploy the second telescopic part (12.2) towards the target (2)
- continuously perform the previous steps until the target (2) is reached.

It has to be noted that the refuelling boom axis (3) resembles the trajectory that the refuelling boom (12) has to follow to reach the target (2) and with the telescopic deployment of the second telescopic part (12.2) the refuelling boom (12) follows this theoretical trajectory.

Other reference marks and other trajectories are possible.

For instance, the following steps can be performed:
- to control the roll (100) joint to place the nozzle axis (3) to pass through the target (2) on the first camera and continuously control to keep this condition,
- to control the pitch (200) joint to place the nozzle axis (3) to pass through the target (2) on the second camera and continuously control to keep this condition,
- while both previous conditions are simultaneously met, the refuelling boom (12) is linearly deployed towards the receptacle (13).

Obvious equivalent guidance laws can be used when the refuelling boom (12) has other type of degrees of freedom, such as pitch (200) and yaw instead of pitch (200) and roll (100).

Thus, the guidance requires finding movements of the mechanical joints such that the refuelling boom (12) reaches and coincides with the target (2) visually in the images of both cameras at the same time. Therefore, the main idea of the guidance method of this embodiment consists of using the joints to make the estimated trajectory, i.e., the nozzle axis (3) to reach simultaneously the target (2) in both video cameras. Therefore, only 2D information is required from the images. Thus, the target (2) is reached at the end of the process and the refuelling boom (12) is continuously controlled to guide it to the target (2) in both images at the same time.

In the particular embodiment of the refuelling boom (12) that comprises a second telescopic part (12.2) that can be oriented in the 3D space with other joints, the calculation of the trajectory is easy to implement. Precise camera calibration or mechanism kinematics are not required. The target (2) and an estimate of the axis (3) of the refuelling boom (12) have to be detected in both cameras. In an embodiment, the axis (3) and the nozzle (12.3) define the trajectory of the nozzle (12.3) in the images when the linear telescopic joint is moved. The detection of the nozzle (12.3) can be desirable but not strictly necessary in all applications, for example, in some aerial refuelling booms (12), where the axis (3) can be detected with enough accuracy without strict nozzle detection. The remaining joints have to be used to align the axis (3) of the linear joint with the target (2) in both cameras. Once this is achieved, it means that the trajectory of the nozzle (12.3) for a telescopic movement is aligned with the target (2) in the 3D space. It is then possible to lineally move the second telescopic part (12.2) to take the nozzle (12.3) to the target (2).

The visual detection of the nozzle axis (3) is not strictly required for the method object of the invention, it could be inferred from other information detected in the image, but in this case some of the advantages described can be lost, for example calibration or detailed geometric knowledge can be required.

In these embodiments, a third camera would be interesting as a checking method.

In a further embodiment, the method comprises the following steps:
- Control the roll (100) joint to locate the nozzle axis (3) which is parallel to the longitudinal direction of the refuelling boom (12) at the same distance to the target (2) in both taken images, i.e., in the vicinity of the target (2), said distance measured in the images. Continuously control to keep this condition true.
- When the previous condition is met with enough accuracy, control the pitch (200) joint to simultaneously reduce the previous distance to zero, what will make the nozzle axis (3) which is parallel to the longitudinal direction of the refuelling boom (12) to pass through the target (2) in both images. Continuously control to keep this condition true.
- While both previous conditions are simultaneously met with enough accuracy the refuelling boom (12) will be aligned with the receiver receptacle (13). Then the linear (300) joint can be used to take the nozzle (12.3) to the target (2), i.e., the receiver receptacle (13).
- Continuously perform the previous steps until the target (2) is reached.

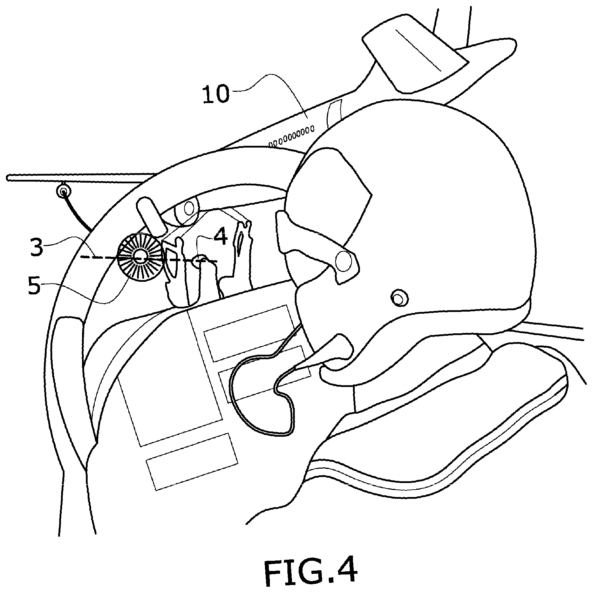

Figure 4 discloses another embodiment wherein the element (1) is a probe (4) of a receiver aircraft (11) and the target (2) is a drogue (5) of a tanker aircraft (10) configured to be connected to the probe (4) for refuelling. The predetermined condition is that a probe axis (3), which may be parallel to the longitudinal direction of the probe (3), passes through the vicinity of the reference mark of the drogue (5) in the images of both imaging devices. The cameras are located in two different positions of the receiver aircraft (11). In an embodiment, the probe axis (3) passes through a tip of the probe (4).

In this embodiment, the control means is configured to:
- control the receiver aircraft (11) vertical position to make the probe axis (3) to pass through the vicinity of the reference mark of the drogue (5) in the images taken by the first imaging device and continuously control to keep this condition,
- control the receiver aircraft (11) lateral horizontal position to make the probe axis (3) to pass through the vicinity of the reference mark of the drogue (5) in the images taken by the second imaging device and continuously control to keep this condition,
- while both previous conditions are simultaneously met, move the receiver aircraft (1) horizontally forward towards the drogue (5),
- continuously perform the previous steps until the drogue (5) is reached.

Vertical, is referred to the position of the receiver aircraft (11) with respect to the ground. Lateral indicates a movement in a plane perpendicular to the longitudinal axis of the receiver aircraft (11) and parallel to the ground and horizontal refers to a movement along the longitudinal axis of the receiver aircraft (11).

Obvious equivalent embodiments can be achieved with receiver movements different form vertical, lateral and forward ones.

Thus, this strategy is also valid for a receiver aircraft (11) control in aerial refuelling with hose and drogue (5) if the receiver aircraft (11) has a pair of, for instance, stereoscopic cameras with visibility of the receiver probe and the drogue (5).

The above embodiments have the following advantages:
- Calibration, precise 3D calculations, detailed or precise knowledge of the element (1) geometry, precise joint position measurements, etc are not required.
- Resultant nozzle (12.3) trajectories after alignment are convenient: in the case of fixed target (2) they are a simple movement along the linear (300) joint.
- The only errors that accumulate are nozzle axis (3) and target (2) detection errors on the images.
- No calibration is required. It is not adversely affected if internal or external camera parameters change or if the mechanism experiences deformation during the machine operation, unless the changes of these parameters are big enough to prevent good enough axis (3) and target (2) detection in the image.
- 2D computer vision algorithms are enough to solve the problem although 3D algorithms can be used applied even if only the 2D information they provide would be used.

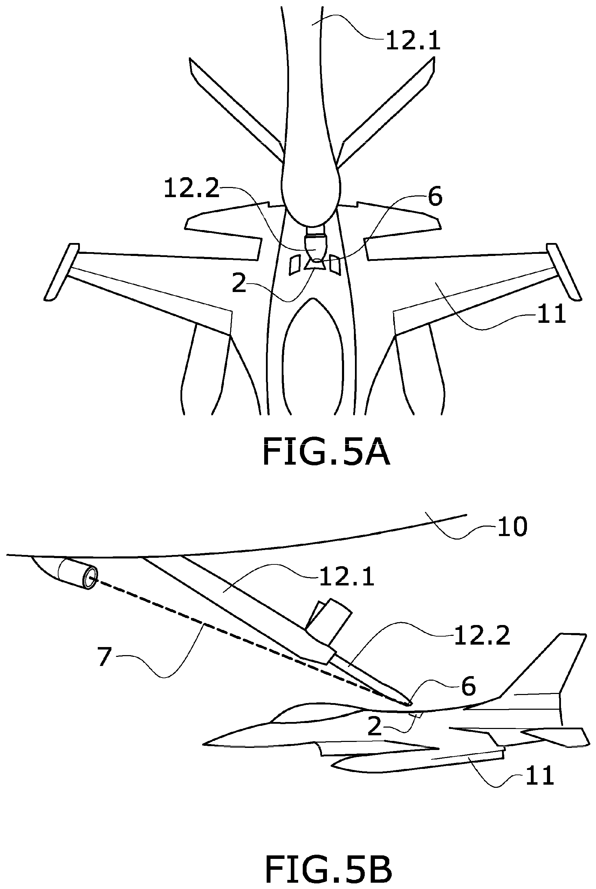

In another embodiment not covered by the claimed invention, depicted in figures 5A and 5B, the reference mark of the element (1) is the end area (6) of the element (1), for instance, of the nozzle (12.3), which is an end area of the element (1) proximal to the target (2), so that the predetermined position is that said end area (6) is located at the vicinity of the reference mark of the target (2) in the image received from one imaging device, for instance, from one camera, so that a line joining the one imaging device with the target (2) defines the trajectory of the element (1) towards the target (2) that will be followed by maintaining said predetermined position.

In the embodiment depicted in figures 5, the control means is configured to:
- control the first part (12.1) to make the end area (6) of the refuelling boom (12) proximal to the target (2), the receptacle (13), to be located at the vicinity of the reference mark of the receptacle (13) in the images taken by the one imaging device and continuously control to keep this condition,
- while the previous condition is met, linearly deploy the second telescopic part (12.2) towards the receptacle (13),
- continuously perform the steps until the target (2), the receptacle (13) is reached.

When the previous procedure is followed, the end area (6) of the refuelling boom (12) is moved along the visual line (7) of the camera towards the receptacle. In figure 5B the visual line (7) is represented in a lateral view showing a refuelling boom (12) and a receiver aircraft (11). The visual line (7) spans from the camera located on the left side of the figure to the target (2), the receptable (13). The end area (6) is moved along the visual line (7) by centering the end area (6) on the target (2) in the image received from the camera, depicted in figure 5A, and subsequently deploying the telescopic part (12.2). Thus, the end area (6) is no longer located over the target (2) in the image received corresponding to figure 5A and in the image of figure 5B it would surpass the visual line (7). Then, the step of centering the end area (6) on the target (2) in the image received is repeated so that the end area (6) would again be located over the visual line (7), i.e., over the target (2) in the received image. This process is continuously performed until contact is made.

In this embodiment the moment when the target (2) is reached can be difficult to detect in the image of the camera used to control it. Additional means may be required to identify this moment. These means can be:
- Specific sensors in the nozzle (12.3), such as force sensors to detect contact forces, proximity sensors, contact sensors, ...
- The processing of the image of an additional imaging system.

In an embodiment, for instance, the following steps can be performed:
- control the roll (100) joint to place the end of the element (1) proximal to the target (2) in the same vertical line as the target (2) in the image received and continuously control to keep this condition,
- while keeping the previous condition true, control the pitch (200) joint to place the end of the element (1) proximal to the target (2) over the target (2) and continuously control to keep this condition,
- while the element (1) is controlled to keep both previous conditions true, extend the telescopic part (12.2) of the element (1).

This guidance laws can also be used in the case that some of the elements involved in the guidance law are not detected in the image, but obtained by other means, for example by geometric calculation. Some of the described advantages are lost, but if enough accuracy is guaranteed, the rest of the benefits can be kept.

## Claims

1. Guidance system of an element (1) towards a target (2), the element (1) being configured to contact the target (2), the guidance system comprising:
- at least a first and a second imaging device located in different positions in the space, each imaging device configured to view both the target (2) and the element (1),
- a control means configured to be in communication with the first and the second imaging device and with the element (1) so that it is configured to receive 2D images taken by at least the first and the second imaging device, the control means being configured to perform the following steps i, ii, iii, iv):
- i) locate in the images received from the first and the second imaging device a reference mark of the element (1) and of the target (2),
- ii) send an instruction to the element (1) to move the element (1) so that the reference mark of the element (1) is located in a predetermined position with respect to the reference mark of the target (2) in the received images so that maintaining this predetermined position in the images received allows the element (1) to follow a predetermined trajectory towards the target (2),
- iii) while the element (1) is controlled to keep the predetermined position of the reference mark with respect to the reference mark of the target (2), send an instruction to the element (1) to move the element (1) towards the target (2), and
- iv) continuously perform the above i, ii, iii) steps until the element (1) reaches the target (2),
the guidance system being **characterised in that** the element (1) is a refuelling boom (12) of a tanker aircraft (10) comprising a nozzle (12.3) and the target (2) is a receptacle (13) of a receiver aircraft (11), the nozzle (12.3) being configured to make contact with the receptacle (13) for refuelling, the reference mark of the refuelling boom (12) being a nozzle axis (3) and the predetermined position being that the nozzle axis (3) passes through the vicinity of the reference mark of the receptacle (13) in the images of both imaging devices so that the nozzle axis (3) defines the trajectory of the refuelling boom (12) towards the receptacle (13) that is configured to be followed by maintaining said predetermined position, or
the element (1) is a probe (4) of a receiver aircraft (11), the reference mark of the element (1) is a probe axis (3), and the target (2) is a drogue (5) of a tanker aircraft (10) configured to be connected to the probe (4) for refuelling, the predetermined position being that the probe axis (3) passes through the vicinity of the reference mark of the drogue (5) in the images of both imaging devices.

2. Guidance system of an element (1) towards a target (2), according to claim 1, wherein while the element (1) is controlled to keep the predetermined position of the reference mark with respect to the reference mark of the target (2), the control means are configured to linearly move the element (1) towards the target (2).

3. Guidance system of an element (1) towards a target (2), according to claim 1, wherein the refuelling boom (12) comprises a first part (12.1) proximal to the tanker aircraft (10) and a second telescopic part (12.2) distal from the tanker aircraft (10), the direction of the first part (12.1) being adjustable in a three-dimensional cartesian coordinate system, wherein the control means is configured to:
• control the first part (12.1) to make the nozzle axis (3) to pass through the vicinity of the reference mark of the target (2) in the images taken by the first imaging device and continuously control to keep this condition,
• control the first part (12.1) to make the nozzle axis (3) to pass through the vicinity of the reference mark of the target (2) in the images taken by the second imaging device and continuously control to keep this condition,
• while both previous conditions are simultaneously met, linearly deploy the second telescopic part (12.2) towards the target (2),
• continuously perform the previous steps until the target (2) is reached.

4. Guidance system of an element (1) towards a target (2), according to claim 1, wherein the control means is configured to:
• control the receiver aircraft (11) vertical position to make the probe axis (3) to pass through the vicinity of the reference mark of the drogue (5) in the images taken by the first imaging device and continuously control to keep this condition,
• control the receiver aircraft (11) lateral horizontal position to make the probe axis (3) to pass through the vicinity of the reference mark of the drogue (5) in the images taken by the second imaging device and continuously control to keep this condition,
• while both previous conditions are simultaneously met, move the receiver aircraft (1) horizontally forward towards the drogue (5)
• continuously perform the previous steps until the drogue (5) is reached.

5. Guidance system of an element (1) towards a target (2), according to claim 1, wherein the element (1) is a refuelling boom (12) of a tanker aircraft (10) and the target (2) is a receptacle (13) of a receiver aircraft (11) in which the refuelling boom (12) is connected for refuelling, the refuelling boom (12) comprising a first part (12.1) proximal to the tanker aircraft (10) and a second telescopic part (12.2) distal from the tanker aircraft (10), the direction of the first part (12.1) being adjustable in a three-dimensional cartesian coordinate system, wherein the control means is configured to:
• control the first part (12.1) to make the end area (6) of the refuelling boom (12) proximal to the receptacle (13) to be located at the vicinity of the reference mark of the receptacle (13) in the images taken by the one imaging device and continuously control to keep this condition,
• while the previous condition is met, linearly deploy the second telescopic part (12.2) towards the receptacle (13),
• continuously perform the steps until the target (2) is reached.

6. Air to air refuelling system, comprising:
- a refuelling boom (12) of a tanker aircraft (10) and a receptacle (13) of a receiver aircraft (11) in which the refuelling boom (12) is connected for refuelling, or
- a probe (4) of a receiver aircraft (11) and a drogue (5) of a tanker aircraft (10) configured to be connected to the probe (4) for refuelling,
the air to air refuelling system **characterised in that** it comprises a guidance system according to any preceding claim.

7. Tanker aircraft (10) comprising a refuelling boom (12) for refuelling, **characterised in that** it comprises an air to air refuelling system according to claim 6.

8. Receiver aircraft (11) comprising a probe (4) for refuelling, **characterised in that** it comprises an air to air refuelling system according to claim 6.

9. Guidance method of an element (1) towards a target (2), the element (1) being configured to contact the target (2), the guidance method comprising the following steps:
- view both the target (2) and the element (1) through at least a first and a second imaging device located in different positions in the space, each imaging device configured to view both the target (2) and the element (1),
- receiving 2D images taken by at least the first and the second imaging device in a control means in communication with the first and the second imaging device and with the element (1),
- the control means performing the following steps:
- locating in the images received from the first and the second imaging device a reference mark of the element (1) and of the target (2),
- sending instructions to the element (1) to move the element (1) so that the reference mark of the element (1) is located in a predetermined position with respect to the reference mark of target (2) in the received images,
- maintaining this predetermined position in the images received so that when the element (1) moves, it follows a predetermined trajectory towards the target (2),
- while the element (1) is controlled to keep the predetermined position of the reference mark with respect to the reference mark of the target (2), sending an instruction to the element (1) to move the element (1) towards the target (2), and
- continuously performing the above steps until the element (1) reaches the target (2),
the guidance method **characterised in** the element (1) being a refuelling boom (12) of a tanker aircraft (10) comprising a nozzle (12.3) and the target (2) being a receptacle (13) of a receiver aircraft (11), the nozzle (12.3) being configured to make contact with the receptacle (13) for refuelling, the reference mark of the refuelling boom (12) being a nozzle axis (3) and the predetermined position being that the nozzle axis (3) passes through the vicinity of the reference mark of the receptacle (13) in the images of both imaging devices so that the nozzle axis (3) defines the trajectory of the refuelling boom (12) towards the receptacle (13) that is configured to be followed by maintaining said predetermined position, or
the element (1) being a probe (4) of a receiver aircraft (11), the reference mark of the element (1) being a probe axis (3), and of the target (2) being a drogue (5) of a tanker aircraft (10) configured to be connected to the probe (4) for refuelling, the predetermined position being that the probe axis (3) passes through the vicinity of the reference mark of the drogue (5) in the images of both imaging devices.

## Patentansprüche

1. System zur Lenkung eines Elements (1) auf ein Ziel (2), wobei das Element (1) dazu konfiguriert ist, das Ziel (2) zu berühren, wobei das System zur Lenkung Folgendes umfasst:
- mindestens eine erste und eine zweite Bildgebungsvorrichtung, die sich an unterschiedlichen Positionen in dem Raum befinden, wobei jede Bildgebungsvorrichtung dazu konfiguriert ist, sowohl das Ziel (2) als auch das Element (1) anzuzeigen,
- eine Steuereinrichtung, die dazu konfiguriert ist, in Kommunikation mit der ersten und der zweiten Bildgebungsvorrichtung und mit dem Element (1) zu sein, so dass sie dazu konfiguriert ist, 2D-Bilder zu empfangen, die von mindestens der ersten und der zweiten Bildgebungsvorrichtung aufgenommen wurden, wobei die Steuereinrichtung dazu konfiguriert ist, die folgenden Schritte i, ii, iii, iv) durchzuführen:
- i) Lokalisieren, in den von der ersten und der zweiten Bildgebungsvorrichtung empfangenen Bildern, einer Referenzmarkierung des Elements (1) und des Ziels (2),
- ii) Senden einer Anweisung an das Element (1), um das Element (1) zu bewegen, so dass sich die Referenzmarkierung des Elements (1) in einer vorbestimmten Position in Bezug auf die Referenzmarkierung des Ziels (2) in den empfangenen Bildern befindet, so dass das Aufrechterhalten dieser vorbestimmten Position in den empfangenen Bildern dem Element (1) ermöglicht, einer vorbestimmten Trajektorie auf das Ziel (2) zu folgen,
- iii) während das Element (1) gesteuert wird, um die vorbestimmte Position der Referenzmarkierung in Bezug auf die Referenzmarkierung des Ziels (2) beizubehalten, Senden einer Anweisung an das Element (1), um das Element (1) auf das Ziel (2) zu bewegen, und
- iv) kontinuierliches Durchführen der oben genannten Schritte i, ii, iii) bis das Element (1) das Ziel (2) erreicht,
wobei das System zur Lenkung **dadurch gekennzeichnet ist, dass** das Element (1) ein Betankungsausleger (12) eines Tankluftfahrzeugs (10) umfassend eine Düse (12.3) ist und das Ziel (2) ein Behälter (13) eines Empfängerluftfahrzeugs (11) ist, wobei die Düse (12.3) dazu konfiguriert ist, für das Betanken mit dem Behälter (13) in Kontakt zu treten, wobei die Referenzmarkierung des Betankungsauslegers (12) eine Düsenachse (3) ist und die vorbestimmte Position ist, dass die Düsenachse (3) in den Bildern beider Bildgebungsvorrichtungen durch die Umgebung der Referenzmarkierung des Behälters (13) passiert, so dass die Düsenachse (3) die Trajektorie des Betankungsauslegers (12) auf den Behälter (13) definiert, die dazu konfiguriert ist, unter Aufrechterhalten der vorbestimmten Position verfolgt zu werden, oder
das Element (1) eine Sonde (4) eines Empfängerluftfahrzeugs (11) ist, wobei die Referenzmarkierung des Elements (1) eine Sondenachse (3) ist und das Ziel (2) ein Fangtrichter (5) eines Tankluftfahrzeugs (10) ist, das dazu konfiguriert ist, für das Betanken mit der Sonde (4) verbunden zu sein, wobei die vorbestimmte Position ist, dass die Sondenachse (3) in den Bildern beider Bildgebungsvorrichtungen durch die Umgebung der Referenzmarkierung des Fangtrichters (5) passiert.

2. System zur Lenkung eines Elements (1) auf ein Ziel (2) nach Anspruch 1, wobei, während das Element (1) gesteuert wird, um die vorbestimmte Position der Referenzmarkierung in Bezug auf die Referenzmarkierung des Ziels (2) beizubehalten, die Steuereinrichtung dazu konfiguriert ist, das Element (1) linear auf das Ziel (2) zu bewegen.

3. System zur Lenkung eines Elements (1) auf ein Ziel (2) nach Anspruch 1, wobei der Betankungsausleger (12) einen ersten Teil (12.1) proximal zu dem Tankluftfahrzeug (10) und einen zweiten teleskopischen Teil (12.2) distal von dem Tankluftfahrzeug (10) umfasst, wobei die Richtung des ersten Teils (12.1) in einem dreidimensionalen kartesischen Koordinatensystem einstellbar ist, wobei die Steuereinrichtung wie folgt konfiguriert ist:
• Steuern des ersten Teils (12.1), um die Düsenachse (3) zu veranlassen, in den von der ersten Bildgebungsvorrichtung aufgenommenen Bildern durch die Umgebung der Referenzmarkierung des Ziels (2) zu passieren und kontinuierliches Steuern, um diese Bedingung beizubehalten,
• Steuern des ersten Teils (12.1), um die Düsenachse (3) zu veranlassen, in den von der zweiten Bildgebungsvorrichtung aufgenommenen Bildern durch die Umgebung der Referenzmarkierung des Ziels (2) zu passieren und kontinuierliches Steuern, um diese Bedingung beizubehalten,
• während beide vorherigen Bedingungen gleichzeitig erfüllt sind, lineares Einsetzen des zweiten teleskopischen Teils (12.2) auf das Ziel (2),
• kontinuierliches Durchführen der vorherigen Schritte bis das Ziel (2) erreicht ist.

4. System zur Lenkung eines Elements (1) auf ein Ziel (2) nach Anspruch 1, wobei die Steuereinrichtung wie folgt konfiguriert ist:
• Steuern der vertikalen Position des Empfängerluftfahrzeugs (11), um die Sondenachse (3) zu veranlassen, in den von der ersten Bildgebungsvorrichtung aufgenommenen Bildern in der Umgebung der Referenzmarkierung des Fangtrichters (5) zu passieren und kontinuierliches Steuern, um diese Bedingung beizubehalten,
• Steuern der seitlichen horizontalen Position des Empfängerluftfahrzeugs (11), um die Sondenachse (3) zu veranlassen, in den von der zweiten Bildgebungsvorrichtung aufgenommenen Bildern in der Umgebung der Referenzmarkierung des Fangtrichters (5) zu passieren und diese Bedingung kontinuierlich beizubehalten,
• während beide vorherigen Bedingungen gleichzeitig erfüllt sind, Bewegen des Empfängerluftfahrzeugs (1) horizontal vorwärts auf den Fangtrichter (5)
• kontinuierliches Durchführen der vorherigen Schritte bis der Fangtrichter (5) erreicht ist.

5. System zur Lenkung eines Elements (1) auf ein Ziel (2) nach Anspruch 1, wobei das Element (1) ein Betankungsausleger (12) eines Tankluftfahrzeugs (10) ist und das Ziel (2) ein Behälter (13) eines Empfängerluftfahrzeuges (11) ist, an dem der Betankungsausleger (12) für das Betanken verbunden ist, wobei der Betankungsausleger (12) einen ersten Teil (12.1) proximal zu dem Tankluftfahrzeug (10) und einen zweiten teleskopischen Teil (12.2) distal von dem Tankluftfahrzeug (10) umfasst, wobei die Richtung des ersten Teils (12.1) in einem dreidimensionalen kartesischen Koordinatensystem einstellbar ist, wobei die Steuereinrichtung wie folgt konfiguriert ist:
• Steuern des ersten Teils (12.1), um den Endbereich (6) des Betankungsauslegers (12) zu veranlassen, sich proximal zu dem Behälter (13) in den von der einen Bildgebungsvorrichtung aufgenommenen Bildern in der Umgebung der Referenzmarkierung des Behälters (13) zu befinden und kontinuierliches Steuern, um diese Bedingung beizubehalten,
• während die vorherige Bedingung erfüllt ist, lineares Einsetzen des zweiten teleskopischen Teils (12.2) auf den Behälter (13),
• kontinuierliches Durchführen der Schritte bis das Ziel (2) erreicht ist.

6. Luft-Luft-Betankungssystem, umfassend:
- einen Betankungsausleger (12) eines Tankluftfahrzeugs (10) und einen Behälter (13) eines Empfängerluftfahrzeugs (11), an den der Betankungsausleger (12) für das Betanken verbunden ist, oder
- eine Sonde (4) eines Empfängerluftfahrzeugs (11) und einen Fangtrichter (5) eines Tankluftfahrzeugs (10), die dazu konfiguriert sind, für das Betanken mit der Sonde (4) verbunden zu sein,
wobei das Luft-Luft-Betankungssystem **dadurch gekennzeichnet ist, dass** es ein System zur Lenkung nach einem der vorhergehenden Ansprüche umfasst.

7. Tankluftfahrzeug (10), umfassend einen Betankungsausleger (12) für das Betanken, **dadurch gekennzeichnet, dass** es ein Luft-Luft-Betankungssystem nach Anspruch 6 umfasst.

8. Empfängerluftfahrzeug (11), umfassend eine Sonde (4) für das Betanken, **dadurch gekennzeichnet, dass** es ein Luft-Luft-Betankungssystem nach Anspruch 6 umfasst.

9. Verfahren zur Lenkung eines Elements (1) auf ein Ziel (2), wobei das Element (1) dazu konfiguriert ist, das Ziel (2) zu berühren, wobei das Verfahren zur Lenkung die folgenden Schritte umfasst:
- Anzeigen sowohl des Ziels (2) als auch des Elements (1) durch mindestens eine erste und eine zweite Bildgebungsvorrichtung, die sich an unterschiedlichen Positionen in dem Raum befinden, wobei jede Bildgebungsvorrichtung dazu konfiguriert ist, sowohl das Ziel (2) als auch das Element (1) anzuzeigen,
- Empfangen von 2D-Bildern, die von mindestens der ersten und der zweiten Bildgebungsvorrichtung aufgenommen wurden, in einer Steuereinrichtung, die in Kommunikation mit der ersten und der zweiten Bildgebungsvorrichtung und mit dem Element (1) ist,
- wobei die Steuereinrichtung die folgenden Schritte umfasst:
- Lokalisieren, in den von der ersten und der zweiten Bildgebungsvorrichtung empfangenen Bildern, einer Referenzmarkierung des Elements (1) und des Ziels (2),
- Senden von Anweisungen an das Element (1), um das Element (1) zu bewegen, so dass sich die Referenzmarkierung des Elements (1) in einer vorbestimmten Position in Bezug auf die Referenzmarkierung des Ziels (2) in den empfangenen Bildern befindet,
- Aufrechterhalten dieser vorbestimmten Position in den empfangenen Bildern, so dass, wenn sich das Element (1) bewegt, es einer vorbestimmten Trajektorie auf das Ziel (2) folgt,
- während das Element (1) gesteuert wird, um die vorbestimmte Position der Referenzmarkierung in Bezug auf die Referenzmarkierung des Ziels (2) beizubehalten, Senden einer Anweisung an das Element (1), um das Element (1) auf das Ziel (2) zu bewegen, und
- kontinuierliches Durchführen der oben genannten Schritte bis das Element (1) das Ziel (2) erreicht,
wobei das Verfahren zur Lenkung **dadurch gekennzeichnet ist, dass** das Element (1) ein Betankungsausleger (12) eines Tankluftfahrzeugs (10) umfassend eine Düse (12.3) ist und das Ziel (2) ein Behälter (13) eines Empfängerluftfahrzeugs (11) ist, wobei die Düse (12.3) dazu konfiguriert ist, für das Betanken mit dem Behälter (13) in Kontakt zu treten, wobei die Referenzmarkierung des Betankungsauslegers (12) eine Düsenachse (3) ist und die vorbestimmte Position ist, dass die Düsenachse (3) in den Bildern beider Bildgebungsvorrichtungen durch die Umgebung der Referenzmarkierung des Behälters (13) passieren, so dass die Düsenachse (3) die Trajektorie des Betankungsauslegers (12) auf den Behälter (13) definiert, die dazu konfiguriert ist, unter Aufrechterhalten der vorbestimmten Position verfolgt zu werden, oder
das Element (1) eine Sonde (4) eines Empfängerluftfahrzeugs (11) ist, wobei die Referenzmarkierung des Elements (1) eine Sondenachse (3) ist und das Ziel (2) ein Fangtrichter (5) eines Tankluftfahrzeugs (10) ist, das dazu konfiguriert ist, für das Betanken mit der Sonde (4) verbunden zu sein, wobei die vorbestimmte Position ist, dass die Sondenachse (3) in den Bildern beider Bildgebungsvorrichtungen durch die Umgebung der Referenzmarkierung des Fangtrichters (5) passiert.

## Revendications

1. Système de guidage d'un élément (1) vers une cible (2), l'élément (1) étant configuré pour entrer en contact avec la cible (2), le système de guidage comprenant :
- au moins un premier et un second dispositif d'imagerie situés dans des positions différentes dans l'espace, chaque dispositif d'imagerie étant configuré pour visualiser à la fois la cible (2) et l'élément (1),
- un moyen de commande configuré pour être en communication avec le premier et le second dispositif d'imagerie et avec l'élément (1) de sorte qu'il soit configuré pour recevoir des images 2D prises par au moins le premier et le second dispositif d'imagerie, le moyen de commande étant configuré pour effectuer les étapes i, ii, iii, iv) suivantes :
- i) la localisation, dans les images reçues du premier et du second dispositif d'imagerie, d'une marque de référence de l'élément (1) et de la cible (2),
- ii) l'envoi d'une instruction à l'élément (1) pour déplacer l'élément (1) de sorte que la marque de référence de l'élément (1) soit située dans une position prédéterminée par rapport à la marque de référence de la cible (2) dans les images reçues, de sorte que le maintien de cette position prédéterminée dans les images reçues permet à l'élément (1) de suivre une trajectoire prédéterminée vers la cible (2),
- iii) tandis que l'élément (1) est commandé pour garder la position prédéterminée de la marque de référence par rapport à la marque de référence de la cible (2), l'envoi d'une instruction à l'élément (1) pour déplacer l'élément (1) vers la cible (2), et
- iv) la mise en œuvre en continu des étapes i, ii, iii) ci-dessus jusqu'à ce que l'élément (1) atteigne la cible (2),
le système de guidage étant **caractérisé en ce que** l'élément (1) est une perche de ravitaillement (12) d'un avion-citerne (10) comprenant une buse (12.3) et la cible (2) est un contenant (13) d'un avion récepteur (11), la buse (12.3) étant configurée pour entrer en contact avec le contenant (13) à des fins de ravitaillement, la marque de référence de la perche de ravitaillement (12) étant un axe de buse (3) et la position prédéterminée étant que l'axe de buse (3) passe à proximité de la marque de référence du contenant (13) dans les images des deux dispositifs d'imagerie de sorte que l'axe de buse (3) définisse la trajectoire de la perche de ravitaillement (12) vers le contenant (13) qui est configurée pour être suivie en maintenant ladite position prédéterminée, ou
l'élément (1) est une sonde (4) d'un avion récepteur (11), la marque de référence de l'élément (1) est un axe de sonde (3), et la cible (2) est un cône de ravitaillement (5) d'un avion-citerne (10) configuré pour être connecté à la sonde (4) à des fins de ravitaillement, la position prédéterminée étant que l'axe de sonde (3) passe à proximité de la marque de référence du cône de ravitaillement (5) dans les images des deux dispositifs d'imagerie.

2. Système de guidage d'un élément (1) vers une cible (2), selon la revendication 1, dans lequel, tandis que l'élément (1) est commandé pour garder la position prédéterminée de la marque de référence par rapport à la marque de référence de la cible (2), les moyens de commande sont configurés pour déplacer linéairement l'élément (1) vers la cible (2).

3. Système de guidage d'un élément (1) vers une cible (2), selon la revendication 1, dans lequel la perche de ravitaillement (12) comprend une première partie (12.1) proximale par rapport à l'avion-citerne (10) et une seconde partie télescopique (12.2) distale par rapport à l'avion-citerne (10), la direction de la première partie (12.1) étant ajustable dans un système de coordonnées cartésiennes tridimensionnel, dans lequel le moyen de commande est configuré pour :
• commander à la première partie (12.1) d'amener l'axe de buse (3) à passer à proximité de la marque de référence de la cible (2) dans les images prises par le premier dispositif d'imagerie et commander à celui-ci de garder en continu cette condition,
• commander à la première partie (12.1) d'amener l'axe de buse (3) à passer à proximité de la marque de référence de la cible (2) dans les images prises par le second dispositif d'imagerie et commander à celui-ci de garder en continu cette condition,
• tandis que les deux conditions précédentes sont simultanément remplies, déployer linéairement la seconde partie télescopique (12.2) vers la cible (2),
• effectuer en continu les étapes précédentes jusqu'à ce que la cible (2) soit atteinte.

4. Système de guidage d'un élément (1) vers une cible (2), selon la revendication 1, dans lequel le moyen de commande est configuré pour :
• régler la position verticale de l'avion récepteur (11) pour amener l'axe de sonde (3) à passer à proximité de la marque de référence du cône de ravitaillement (5) dans les images prises par le premier dispositif d'imagerie et commander à celui-ci de garder en continu cette condition,
• régler la position horizontale latérale de l'avion récepteur (11) pour amener l'axe de sonde (3) à passer à proximité de la marque de référence du cône de ravitaillement (5) dans les images prises par le second dispositif d'imagerie et commander à celui-ci de garder en continu cette condition,
• tandis que les deux conditions précédentes sont simultanément remplies, déplacer l'avion récepteur (1) horizontalement vers l'avant en direction du cône de ravitaillement (5)
• effectuer en continu les étapes précédentes jusqu'à ce que le cône de ravitaillement (5) soit atteint.

5. Système de guidage d'un élément (1) vers une cible (2), selon la revendication 1, dans lequel l'élément (1) est une perche de ravitaillement (12) d'un avion-citerne (10) et la cible (2) est un contenant (13) d'un avion récepteur (11) auquel est connectée la perche de ravitaillement (12) à des fins de ravitaillement, la perche de ravitaillement (12) comprenant une première partie (12.1) proximale par rapport à l'avion-citerne (10) et une seconde partie télescopique (12.2) distale par rapport à l'avion-citerne (10), la direction de la première partie (12.1) étant ajustable dans un système de coordonnées cartésiennes tridimensionnel, dans lequel le moyen de commande est configuré pour :
• commander à la première partie (12.1) d'amener la zone d'extrémité (6) de la perche de ravitaillement (12) proximale par rapport au contenant (13) à être située à proximité de la marque de référence du contenant (13) dans les images prises par ledit dispositif d'imagerie et commander à celui-ci de garder en continu cette condition,
• lorsque la condition précédente est remplie, déployer linéairement la seconde partie télescopique (12.2) vers le contenant (13),
• effectuer en continu les étapes jusqu'à ce que la cible (2) soit atteinte.

6. Système de ravitaillement en vol, comprenant :
- une perche de ravitaillement (12) d'un avion-citerne (10) et un contenant (13) d'un avion récepteur (11) auquel est connectée la perche de ravitaillement (12) à des fins de ravitaillement, ou
- une sonde (4) d'un avion récepteur (11) et un cône de ravitaillement (5) d'un avion-citerne (10) configuré pour être connecté à la sonde (4) à des fins de ravitaillement,
le système de ravitaillement en vol étant **caractérisé en ce qu'**il comprend un système de guidage selon une quelconque revendication précédente.

7. Avion-citerne (10) comprenant une perche de ravitaillement (12) à des fins de ravitaillement, **caractérisé en ce qu'**il comprend un système de ravitaillement en vol selon la revendication 6.

8. Avion récepteur (11) comprenant une sonde (4) à des fins de ravitaillement, **caractérisé en ce qu'**il comprend un système de ravitaillement en vol selon la revendication 6.

9. Méthode de guidage d'un élément (1) vers une cible (2), l'élément (1) étant configuré pour entrer en contact avec la cible (2), la méthode de guidage comprenant les étapes suivantes :
- visualisation à la fois de la cible (2) et de l'élément (1) par l'intermédiaire d'au moins un premier et un second dispositif d'imagerie situés dans des positions différentes dans l'espace, chaque dispositif d'imagerie étant configuré pour visualiser à la fois la cible (2) et l'élément (1),
- réception des images 2D prises par au moins le premier et le second dispositif d'imagerie dans un moyen de commande en communication avec le premier et le second dispositif d'imagerie et avec l'élément (1),
- le moyen de commande effectuant les étapes suivantes :
- localisation, dans les images reçues du premier et du second dispositif d'imagerie, d'une marque de référence de l'élément (1) et de la cible (2),
- envoi d'instructions à l'élément (1) pour déplacer l'élément (1) de sorte que la marque de référence de l'élément (1) soit située dans une position prédéterminée par rapport à la marque de référence de la cible (2) dans les images reçues,
- maintien de cette position prédéterminée dans les images reçues de sorte que, lorsque l'élément (1) se déplace, il suive une trajectoire prédéterminée vers la cible (2),
- tandis que l'élément (1) est commandé pour garder la position prédéterminée de la marque de référence par rapport à la marque de référence de la cible (2), envoi d'une instruction à l'élément (1) pour déplacer l'élément (1) vers la cible (2), et
- mise en œuvre en continu des étapes ci-dessus jusqu'à ce que l'élément (1) atteigne la cible (2),
la méthode de guidage étant **caractérisée en ce que** l'élément (1) est une perche de ravitaillement (12) d'un avion-citerne (10) comprenant une buse (12.3) et la cible (2) est un contenant (13) d'un avion récepteur (11), la buse (12.3) étant configurée pour entrer en contact avec le contenant (13) à des fins de ravitaillement, la marque de référence de la perche de ravitaillement (12) étant un axe de buse (3) et la position prédéterminée étant que l'axe de buse (3) passe à proximité de la marque de référence du contenant (13) dans les images des deux dispositifs d'imagerie de sorte que l'axe de buse (3) définisse la trajectoire de la perche de ravitaillement (12) vers le contenant (13) qui est configurée pour être suivie en maintenant ladite position prédéterminée, ou
l'élément (1) étant une sonde (4) d'un avion récepteur (11), la marque de référence de l'élément (1) étant un axe de sonde (3), et la cible (2) étant un cône de ravitaillement (5) d'un avion-citerne (10) configuré pour être connecté à la sonde (4) à des fins de ravitaillement, la position prédéterminée étant que l'axe de sonde (3) passe à proximité de la marque de référence du cône de ravitaillement (5) dans les images des deux dispositifs d'imagerie.
